# EUROPÄISCHE PATENTSCHRIFT

(11) **EP 0 678 541 B1**
(45) Veröffentlichungstag und Bekanntmachung des Hinweises auf die Patenterteilung: **09.02.2000**
(21) Anmeldenummer: 95105238.0
(22) Anmeldetag: 07.04.1995
(51) Int. Cl.: C08G 77/08, C08G 77/18

(54) **Verfahren zur Herstellung von Umsetzungsprodukten aus Poly(diorganosiloxanen)**
Method for preparing reaction products of polydiorganosiloxanes
Procédé de préparation des produits de réaction de polydiorganosiloxanes

(30) Priorität: 20.04.1994 DE 4413706; 13.10.1994 DE 4436536
(43) Veröffentlichungstag der Anmeldung: 25.10.1995
(73) Patentinhaber: GE Bayer Silicones GmbH & Co. KG, 40699 Erkrath (DE)
(72) Erfinder: Friebe, Robert, Dr., D-51373 Leverkusen (DE)
(74) Vertreter: Leifert, Elmar, Dr.

(56) Entgegenhaltungen:
- EP-A- 0 508 490
- EP-A- 0 576 166
- EP-A- 0 672 702
- US-A- 4 611 040
- DATABASE WPI Derwent Publications Ltd., London, GB; AN 84-221813 & JP-A-59 129 230 (DAINIPPON INK CHEM.KK.) , 25.Juli 1984
- DATABASE WPI Derwent Publications Ltd., London, GB; AN 84-191772 & JP-A-59 108 033 (DAINIPPON INK KK.) , 22.Juni 1984

## Beschreibung

Die vorliegende Erfindung betrifft ein Verfahren zur Herstellung von Umsetzungsprodukten aus Poly(diorganosiloxanen) und Alkoxysilanen.

Ziel der Umsetzung von Poly(diorganosiloxanen) mit Alkoxysilanen ist die Herstellung von Poly(diorganosiloxanen) mit Diorganyloxy-organosilyl- oder Triorganyloxysilyl-Endgruppen. Dabei haben folgende Wege Eingang in die Literatur gefunden:
1. Die Umsetzung von α, 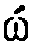 -Dihydroxy-poly(diorganosiloxanen) mit Alkoxysilanen in Gegenwart geeigneter Katalysatoren und
2. die Umsetzung von α, 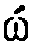 -Dihydroxy-poly(diorganosiloxanen) mit gemischt funktionellen Silanen, wie z.B. Alkoxy-amidosilanen (DE-PS 1 247 646), Alkoxy-oximosilanen (EP 98 369) und Alkoxy-acetoxysilanen (US-PS 3 296 165), ohne zusätzlichen Katalysator.

Bei dem ersten beschriebenen Weg sind als Katalysatoren vor allem Amine (EP 21 859), Amine im Gemisch mit Metallcarboxylaten (US-PS 3 161 614) sowie Amine im Gemisch mit Carbonsäuren (EP 137 883), Ammoniumcarbamate, bevorzugt (CH₃)₂NH₂OCON(CH₃)₂ (DE-PS 3 523 206) und Hydroxylaminderivate (EP 70 786) bekannt.

Bei allen bisher beschriebenen Katalysatoren bzw. Katalysatorsystemen, die bei der Herstellung Alkoxy-endgestoppter Polysiloxane eingesetzt wurden, sind jedoch lange Reaktionszeiten und hohe Temperaturen erforderlich. Zudem müssen die Katalysatoren in substantiellen Mengen verwendet werden, wobei deren Entfernung aus dem Polymer meist nur schwer oder überhaupt nicht möglich ist. Diese Nachteile konnten durch die Verwendung von Alkalimetallhydroxiden und Alkoholen (DE-OS 4 022 661, EP-A 457 693 als Katalysatoren beseitigt werden. Die extreme Aktivierung durch Hydroxid- bzw. Alkoholationen führte jedoch zu unerwünschten Nebenreaktionen, wie z.B. Polymerumlagerungen, so daß der Katalysator nach Ablauf der Reaktion schnellstens mittels Neutralisation inaktiviert werden mußte.

Im zweiten Weg sind die eingesetzten Silane im Gegensatz zu den reinen Organyloxy- bzw. Organyloxyorganosilanen ausreichend reaktiv, um auch ohne Verwendung von Katalysatoren mit α, 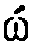 -Dihydroxy-poly(diorganosiloxanen) zu reagieren. Die Herstellung der Silane ist jedoch teuer und die Entfernung der Spaltprodukte schwer bzw. unmöglich.

Vor allem aus ökonomischen Gründen ist die Umsetzung von α, 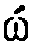 -Dihydroxypoly(diorganosiloxanen) mit Alkoxysilanen unter Verwendung geeigneter Katalysatoren dem letztgenannten Verfahren vorzuziehen.

Aufgabe der vorliegenden Erfindung war die Bereitstellung eines Verfahrens zur Umsetzung von Poly(diorganosiloxanen) mit Alkoxysilanen, welches insbesondere die Herstellung von Poly(diorganosiloxanen) mit Diorganyloxy-organosilyl- oder Triorganyloxysilyl-Endgruppen nach kurzer Reaktionszeit bereits bei Raumtemperatur ermöglicht.

Überraschenderweise wurde nun gefunden, daß die Umsetzung von Poly-(diorganosiloxanen) und Alkoxysilanen in Gegenwart von Fluoriden bereits bei Raumtemperatur innerhalb weniger Minuten zur Herstellung Alkoxy-endgestoppter Poly(diorganosiloxane) führt und zudem sich in diesem Gemisch bei verlängerter Reaktionszeit die zugeführten Fluoridionen zum gezielten Abbau hochmolekularer Poly(diorganosiloxane) eignen.

Gegenstand der vorliegenden Erfindung ist daher ein Verfahren zur Herstellung von Triorganytoxysilyl- bzw. Diorganyloxyorganasilyl-endgestappten Poly(diorganosiloxanen) durch die Umsetzung von einem Polysilaxan oder einem Gemisch aus mehreren Polysiloxanen der Formel (la) 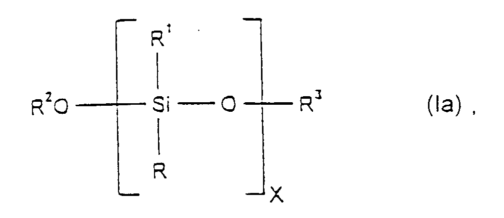 worin
- R, R¹: C₁-C₁₈-Alkyl-/Alkoxyreste, Phenyl, C₂-C₁₈-Alkenyl-, Alkoxyalkylreste bedeuten und R gleich oder ungleich R¹ sein kann,
- R², R³ =: H- und
- x =: 10 bis 10 000 ist,
mit einem Alkoxysilan in Gegenwart von Fluoridionen als Aktivator, dadurch gekennzeichnet, daß die Umsetzung nach der Herstellung von Triorganyloxysilyl- bzw. Diorganyloxyorganylsilyl-endgestoppten Poly(diorganosiloxanen) durch Ausfällen der Fluoridionen als schwerlösliche Erdalkalimetallfluoride durch die Zugabe von in diesem System löslichen Erdalkalimetallsalzen beendet wird.

Gegenstand der Erfindung ist ferner ein Verfahren zur Herstellung von Umsetzungsprodukten aus mindestens einem Polysiloxan in der Formel (Ib) 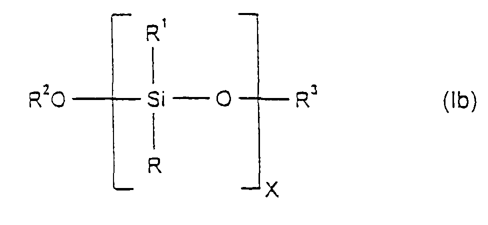 oder einem Polysiloxan mit Netzwerkstruktur mit einem Alkoxysilan zu Produkten der Formeln 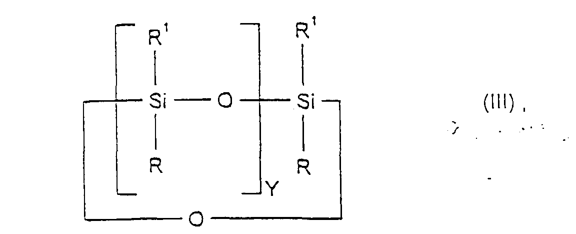 oder 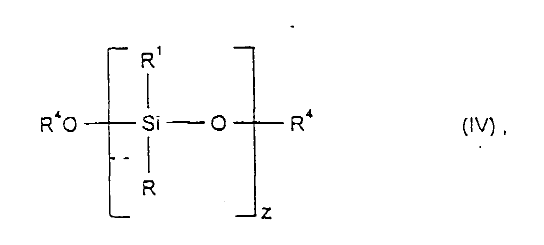 in der
- R, R¹: C₁-C₁₈-Alkyl- oder C₁-C₁₈-Alkoxyreste, C₆-C₁₄-Aryl-, C₂-C₁₈-Alkoxyalkyl-/-Alkenylreste bedeuten und R gleich oder ungleich R¹ sein kann,
- R², R³: C₁-C₁₈-Alkyl, C₆-C₁₄-Aryl und SiR'₃-Reste bedeuten, mit R' = C₁-C₁₈-Alkyl/-Alkoxy, C₆-C₁₄-Aryl-, C₂-C₁₈-Alkenyl-, Alkoxyalkyl-Reste, wobei R² und R³ gleich oder verschieden sein können,
- R⁴: C₁-C₁₈-Alkylreste, -SiR'₃ mit R' = C₁-C₁₈-Alkoxy, -Alkyl, C₆-C₁₄-Aryl oder C₂-C₁₈-Alkenyl-/-Alkoxyalkyl bedeuten,
- x: 10 bis 10.000,
- y: 3 bis 20 und
- z: 1 bis 200 ist,
dadurch gekennzeichnet, daß die Reaktion in Gegenwart von Fluoridionen als Aktivator durchgeführt wird.

In einer bevorzugten Ausführungsform der vorliegenden Erfindung weisen die Polysiloxane eine Netzstruktur auf.

Beispiele für diese eine Netzstruktur aufweisende Polysiloxane sind vulkanisierte Elastomere, wie beispielsweise hochtemperaturvulkanisierende (HV)-, Liquid- silicon (LSR)-, Raumtemperatur-vulkanisierende (RTV)-Einkomponenten (1K) oder -Zweikomponenten(2K)-Elastomere.

Die Netzstruktur der Polysiloxane kann u.a. durch die im folgenden genannten Einheiten aufgebaut sein.

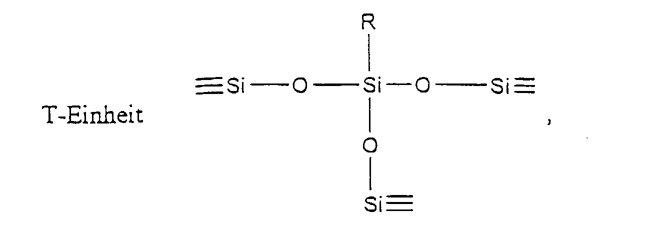

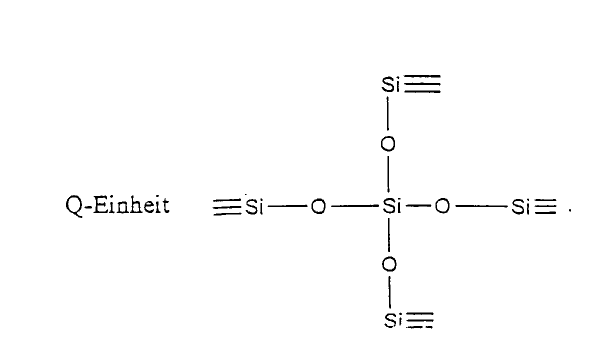

Gruppen, die durch Hydrosilylierungs- oder peroxidischen Vernetzungsreaktionen gebildet werden, wie z.B. Alkylengruppen.

Als Alkoxysilan wird im Sinne der Erfindung mindestens ein Alkoxysilan oder ein Gemisch aus mehreren Alkoxysilanen der Formel (II)

R⁷ ₙSi(OR⁶)₄₋ₙ (II)

eingesetzt,
worin
- R⁶: ein C₁-C₆-Alkyl-, C₂-C₈-Alkoxyalkylrest oder C₅-C₇-cycloaliphatischen Kohlenwasserstoffrest,
- R⁷: ein C₁-C₁₀-Alkyl-, C₂-C₁₀-Alkenyl-, Phenylrest und
- n: 0, 1 oder 2 bedeutet.

Besonders bevorzugte Alkoxysilane sind Tetraethoxysilan, Methyltrimethoxysilan, Methyltriethoxysilan, Vinyltriethoxysilan und Dimethyldimethoxysilan. Geeignet sind ebenfalls an der Alkylgruppe substituierte Alkoxysilane, wie z.B. XCH₂CH₂CH₂Si(OR¹)₃ mit X = HS-, H₂N-, R₂N-, Cl- und anderen Substituenten.

Aktivatoren im Sinne der Erfindung sind im System lösliche Metall- und Nichtmetallfluoride.

Metallfluoride im Sinne der Erfindung sind vorzugsweise Alkalimetallfluoride, wie z.B. Natriumfluorid, Kaliumfluorid. Als Fluoridionenquelle werden bevorzugt Nichtmetallfluoride eingesetzt. Besonders bevorzugt sind Ammoniumfluorid und/oder Tetraalkylammoniumfluorid, ganz besonders bevorzugt Tetrabutylammoniumfluorid sowie Trialkylamin-hydrofluoride, wie beispeilsweise Triethylamintrishydrofluorid [(C₂H₅)₃N·3HF] und andere Polyhydrofluoride tertiärer organischer Amine. Die Aktivatoren können sowohl in reiner Form als auch in gelöstem Zustand in geeigneten Lösemitteln oder in Alkoxysilanen den Reaktionsgemischen zugesetzt werden. Als besonders geeighete Lösemittel haben sich Alkohole und Alkoxysilane erwiesen.

Mit der vorliegenden Erfindung wurde festgestellt, daß schon sehr geringe Konzentrationen an Fluoridionen ausreichen, um als Aktivator bei der Umsetzung zu fungieren. In dem erfindungsgemäßen Verfahren zur Herstellung von Umsetzungsprodukten aus Polysiloxanen und Alkoxysilanen werden bevorzugt 0,001 bis 5 Gew.-%, bevorzugt 0,001 bis Gew.-%, besonders bevorzugt 0,001 bis 0,5 Gew.-% an Fluoridionen, bezogen auf die Gesamtmischung, eingesetzt.

Das erfindungsgemäße Verfahren findet bei Temperaturen zwischen 0 und 300°C statt.

In einer bevorzugten Ausführungsform der vorliegenden Erfindung wird das Verfahren zur Umsetzung von Polysiloxanen mit Alkoxysilanen in Gegenwart von Fluoridionen nach der Herstellung von Triorganylsilyl- bzw. Diorganyloxyorganylsilyl-endgestoppten Poly(diorganosiloxanen) durch Ausfällen der Fluoridionen als schwerlösliche Erdalkalimetallfluoride beendet, wobei die eingesetzten Polysiloxane der Formel (I) über mindestens eine OH-Funktion verfügen. Bevorzugt werden Polysiloxane mit einem Gehalt von 0,01 bis 19 Gew.-% SiOH, bezogen auf das Polymer, besonders bevorzugt α, 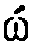 -Dihydroxy-poly(diorganosiloxane) eingesetzt.

Ebenso sind alle zuvor beschriebenen Alkoxysilane analog Formel (II) sowie alle zuvor beschriebenen Alkali- und Nichtmetallfluoride einsetzbar. Ein Abbruch der Reaktion kann durch Zugabe von Erdalkalimetallionen erreicht werden. Dabei kommt es zur Bildung schwerlöslicher Erdalkalimetallfluoride, die nicht mehr aktivierend auf das System wirken. Als Erdalkalimetallverbindungen sind beliebige, in diesem System lösliche Erdalkalimetallsalze geeignet. Besonders geeignet ist Calciumchlorid. Um eine möglichst gute Verteilung im Reaktionsgemisch und kurze Reaktionszeiten zu erzielen, werden die Erdalkalimetallsalze in gelöster Form zum Reaktionsgemisch gegeben. Als besonders geeignetes Lösungsmittel haben sich Alkohole, wie Methanol und Ethanol, erwiesen.

Die Menge an eingesetzten Erdalkalimetallverbindungen richtet sich nach der Konzentration der Fluoridionen im Reaktionsgemisch. Die Erdalkalimetallionen müssen mindestens im stöchiometrischen Verhältnis, bezogen auf die Fluoridionen, eingesetzt werden, wobei sich ein 20 bis 100 %iger Überschuß, bezogen auf die stöchiometrisch eingesetzte Menge an Fluorid, als günstig erwiesen hat.

Die Reaktionsbedingungen bei der Umsetzung von Poly(diorganosiloxanen) mit Alkoxysilanen richten sich nach der Reaktivität des verwendeten Alkoxysilans und den gewünschten Reaktionsprodukten. Das erfindungsgemäße Verfahren findet bei Temperaturen zwischen 0 und 300°C, bevorzugt 15 bis 60°C, besonders bevorzugt 18 bis 40°C, ganz besonders bevorzugt bei Raumtemperatur, statt. Die Reaktionszeit beträgt dabei mindestens 3 Minuten, vorzugsweise 5 bis 30 Minuten. Die Reaktionszeit richtet sich dabei nach dem gewünschten Grad der Endstoppung. Die besonders bevorzugte Umsetzungsdauer beträgt bei Raumtemperatur weniger als 10 Minuten.

Soll das Polymer zur Herstellung von RTV-1K-(Raumtemperatur vulkanisierende 1-Komponenten-)Massen verwendet werden, so bietet sich ein Eintopfverfahren im Mischaggregat an.

In einer weiteren Ausführungsform der vorliegenden Erfindung dauert die Umsetzung der Polysiloxane mit den Alkoxysilanen in Gegenwart der Fluoridionen bei Temperaturen zwischen 0 und 300°C mindestes 5 Minuten.

Bei dieser Ausführungsform können Polysiloxane der Formel (Ia) oder (Ib) eingesetzt werden. Bevorzugt werden jedoch die schon zuvor genannten Polysiloxane mit Netzwerkstruktur eingesetzt. Ebenso sind alle zuvor beschriebenen Alkoxysilane analog Formel (II) sowie alle zuvor beschriebenen Metall- und Nichtmetallfluoride einsetzbar.

In dieser Ausführungsform des erfindungsgemäßen Verfahrens werden vorzugsweise als niedrigmolekulare Siloxane Verbindungen der allgemeinen Formel (III) 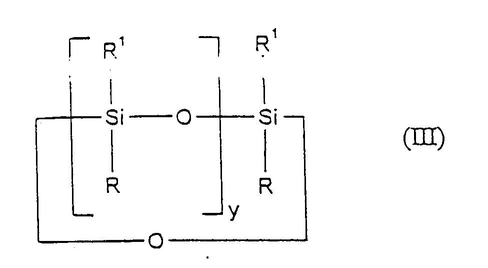 in der
- R, R¹: C₁-C₁₈-Alkyl- oder C₁-C₁₈-Alkoxy, C₆-C₁₄-Aryl-,C₂-C₁₈-Alkoxyalkyl-/-Alkenylreste bedeuten und R gleich oder ungleich R¹ sein kann,
- y =: 3 bis 20, bevorzugt y = 3 bis 6, besonders bevorzugt y = 3 ist, hergestellt.

In einer weiteren Ausführungsform werden vorzugsweise als niedrigmolekulare Siloxane, lineare und/oder verzweigte kurzkettige Siloxane der allgemeinen Formel (IV) 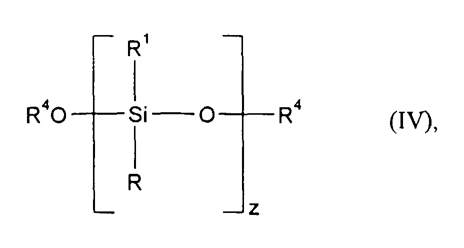 in der
- R, R¹: C₁-C₁₈-Alkyl- oder C₁-C₁₈-Alkoxyreste, C₆-C₁₄-Aryl-, C₂-C₁₈-Alkoxyalkyl-/-Alkenylreste bedeuten und R gleich oder ungleich R¹ sein kann,
- R⁴: C₁-C₁₈-Alkylreste oder -SiR'₃ mit R' = C₁-C₁₈-Alkoxy-/-Alkyl, C₆-C₁₄-Aryl oder C₂-C₁₈-Alkenyl-/-Alkoxyalkyl bedeuten und
- z: 1 bis 200, bevorzugt 3 bis 100, besonders bevorzugt 3 bis 10 ist,
hergestellt.

Die niedrigmolekularen, verzweigten, kurzkettigen Siloxane der Formel (IV) können aber auch im Gemisch mit den niedrigmolekularen Cyclen der Formel (III) entstehen.

Die Umsetzung kann sowohl bei Raumtemperatur als auch bei erhöhter Temperatur durchgeführt werden. Die Reaktionszeit richtet sich dabei nach der Art des verwendeten Poly(diorganosiloxans) und der Temperatur. Sie kann zwischen einigen Stunden und mehreren Tagen betragen. Durch Destillation unter vermindertem Druck können die flüchtigen Reaktionsprodukte, wie z.B. cyclische Diorganosiloxane vom Reaktionsgemisch abgetrennt werden. Die Umsetzung der Polysiloxane mit den Alkoxysilanen in Gegenwart der Fluoridionen kann auch in geeigneten Lösemitteln durchgeführt werden. Als Lösemittel kommen beliebige organische Lösemittel, wie z.B. Toluol, Xylol, Alkohol oder auch niedrigviskose Poly(diorganosiloxane) bzw. cyclische Diorganosiloxane, in Frage.

Das erfindungsgemäße Verfahren soll anhand der folgenden Beispiele näher erläutert werden.

### Ausführungsbeispiele

Zur Überprüfung der Endstoppung wurden die Produkte der Beispiele und der Vergleichsbeispiele folgendermaßen untersucht:
1. Viskositätsbestimmung mit einem Haake Rotationsviskosimeter,
2. Vernetzungstest und
3. Bestimmung des SiOH-Gehaltes durch FT-IR-Differenzspektroskopie.

Für den unter 2. beschriebenen Vernetzungstest wurden 20 Gew.-Teile der zu prüfenden Mischung mit 1 Gew.-Teil einer Testlösung versetzt. Diese Testlösung wurde durch Auflösen von 40 % Dibutylzinnoxid in Tetraethylsilicat bei 100°C hergestellt. Beobachtet man nach Zugabe der Testlösung einen raschen Viskositätsanstieg unter Vergelung des Gemisches, so ist dies als Hinweis auf eine unvollständige Umsetzung der SiOH-Gruppen zu werten. Wird ein solches Verhalten nicht festgestellt und härtet das Material bei Einwirkung von Luftfeuchtigkeit aus, so kann auf eine erfolgte Endstoppung geschlossen werden.

### Beispiel 1

In einem Planetenmischer wurde eine Mischung von 55 Gew.-Teilen eines OH-endgestoppten Poly(dimethylsiloxans) mit einer Viskosität von 80 Pa.s und 29 Gew.-Teilen eines Trimethylsilyl-endgestoppten Poly(diorganosiloxans) mit einer Viskosität von 100 mPa.s vorgelegt. Dieser Mischung wurden 2,5 Gew.-Teile Methyltrimethoxysilan zugefügt, die 1,0 Gew.-% Tetrabutylammoniumfluorid enthielt. Nach 10 Minuten wurden 0,55 Gew.-Teile einer Lösung von 1 Gew.-% Calciumchlorid in Ethanol zugegeben.

Das Polymergemisch besaß sofort nach der Herstellung eine Viskosität von 15,7 Pa.s, die sich bei Wiederholungsmessungen nach einem Tag und 7 Tagen nicht veränderte. Mittels FT-IR Spektroskopie konnten keine SiOH-Gruppen nachgewiesen werden. Der Vernetzungstest zeigte keine rasche Vergelung, sondern ergab nach 24 Stunden unter Zutritt von Feuchtigkeit bei 2 mm Schichtdicke einen vollständig durchgehärteten Prüfkörper. Aus diesen Ergebnissen wurde geschlossen, daß die gewünschte Endstoppung stattgefunden hatte.

### Beispiel 2 (Vergleichsbeispiel)

Das Beispiel 1 wurde ohne Zusatz eines Katalysators unter Verwendung von Methyltrimethoxysilan wiederholt. Die Mischung wies eine Viskosität von 16,5 Pa.s auf und einen SiOH-Gehalt von 0,16 Gew.-%. Bei Zugabe der Testlösung im Vernetzungstest fand eine starke Vergelung statt.

### Beispiel 3 (Vergleichsbeispiel)

Beispiel 1 wurde ohne Zusatz der Calciumchloridlösung wiederholt. Die Viskosität des Polymers baut sich stark ab und erreicht nach 24 Stunden ca. 1 Pa.s. Der SiOH-Gehalt lag bei max. 0,01 Gew.-%. Im Vernetzungstest kam es weder zu einer Vergelung noch zu einer Vernetzung des Materials nach 24 Stunden.

### Beispiel 4

Beispiel 1 wurde unter Zugabe von 0,92 Gew.-Teilen einer Lösung von 1 Gew.-% Calciumchlorid in Ethanol wiederholt. Die Viskosität des Polymergemisches betrug 15,0 Pa.s und änderte sich im Verlauf von 7 Tagen nicht. SiOH-Gruppen konnten nicht mehr nachgewiesen werden und der Vernetzungstest führte zu keiner Vergelung. Es bildete sich nach 24 Stunden ein vollständig durchgehärteter Prüfkörper.

### Beispiel 5

Beispiel 1 wurde unter Zugabe von 1,25 Gew.-Teilen Methyltrimethoxysilan und 1,25 Gew.-Teilen eines Methyltrimethoxysilans mit 1 Gew.-% Tetrabutylammoniumfluorid durchgeführt. Nach 15 Minuten wurden 0,27 Gew.-Teile einer Lösung von 1 % Calciumchlorid in Ethanol zugegeben. Es konnten keine SiOH-Gruppen mehr nachgewiesen werden. Die Viskosität betrug über einen Zeitraum von 7 Tagen unverändert 18,2 Pa.s. Im Vernetzungstest wurde keine Vergelung beobachtet.

### jBeispiel 6

Das Beispiel 1 wurde unter Verwendung von 2,5 Gew.-Teilen Methyltrimethoxysilan und 0,25 Gew.-Teilen einer Lösung von 10 % Tetrabutylammoniumfluorid in Methanol durchgeführt. Die Deaktivierung der Fluoridionen wurde durch Zugabe von 0,6 Gew.-Teilen einer Lösung von 1 % Calciumchlorid in Ethanol nach 10 Minuten durchgeführt. Der Vernetzungstest führte zu keiner Vergelung und der SiOH-Gehalt betrug max. 0,01 %.

### Beispiel 7

Mit diesem Beispiel soll die Möglichkeit der Nutzung des erfindungsgemäßen Verfahrens zur Herstellung einer RTV-1K-Masse in einem Eintopfverfahren im Verlauf der Compoundierung gezeigt werden.

In einem Planetenmischer wurden 55 Gew.-Teile eines OH-endgestoppten Poly(dimethylsiloxans) mit einer Viskosität von 80 Pa.s und 29 Gew.-Teilen eines Trimethylsilyl-endgestoppten Poly(dimethylsiloxans) mit einer Viskosität von 100 mPa.s vorgelegt. Anschließend wurden 2,5 Gew.-Teile einer Lösung von 1 % Tetrabutylamoniumfluorid in Methyltrimethoxysilan eingerührt und 10 Minuten gewartet. Durch Zugabe von 0,55 Gew.-Teilen einer Lösung von 1 % Calciumchlorid in Ethanol wurde die Endstoppung beendet. Anschließend wurden 9,5 Gew.-Teile einer hydrophobierten pyrogenen Kieselsäure (BET Oberfläche 110 m²/g) zugegeben und untergerührt. Danach wurde 1 Gew.-Teil eines Diisobutoxy-bisacetessigsäureethylestertitanchelates zugegeben und eingerührt. Die Einarbeitung des Titankomplexes verlief ohne Störungen. Da bei Verwendung OH-endgestoppter Polymere nach Zugabe des Titankatalysators üblicherweise ein unerwünschter Viskositätsanstieg beobachtet wird, kann hieraus geschlossen werden, daß die Endstoppung des Polymers abgeschlossen war.

Die Mischung wurde in Kartuschen abgefüllt. Zur Überprüfung der mechanischen Daten wurden 2 mm dicke Felle ausgezogen und nach 14-tägiger Aushärtung bei 23°C und 50 % relativer Luftfeuchte ein Zug-/Dehnversuch nach DIN 53504 durchgeführt.

| | |
|---|---|
| Zugspannung bei 100 % Dehnung | 0,32 [MPa] |
| Reißfestigkeit | 1,80 [MPa] |
| Bruchdehnung | 670 [%] |
| Härte (nach 21 Tagen, DIN 53505) | 21 Shore A |

Die Paste zeigte nach dreimonatiger Lagerung in Kartuschen bei Raumtemperatur bzw. 50°C bei Wiederholung der mechanischen Prüfung keine nennenswerten Abweichungen vom Verhalten frischer Ware und war in einwandfreiem Zustand.

### Beispiel 8

In einem Planetenmischer wurden 42 Gew.-Teile eines OH-endgestoppten Poly(dimethylsiloxans) mit einer Viskosität von 80 Pa.s und 18 Gew.-Teilen eines Trimethylsilyl-endgestoppten Poly(dimethylsiloxans) mit einer Viskosität von 100 mPa.s vorgelegt. Anschließend wurden 2 Gew.-Teile einer Lösung von 1 % Tetrabutylammoniumfluorid in Methyltrimethoxysilan eingerührt und nach 10 Minuten Wartezeit 0,55 Gew.-Teile einer Lösung von 1 % Calciumchlorid in Ethanol zugegeben. Anschließend wurden 30 Gew.-Teile einer mit Stearinsäure hydrophobierten gemahlenen Kreide und 5,5 Gew.-Teile einer hydrophobierten pyrogenen Kieselsäure (BET Oberfläche 110 m²/g zugegeben und untergerührt. Danach wurde 1 Gew.-Teil eines Diisobutoxy-bisacetessigsäureethylestertitanchelates zugegeben und eingerührt. Die Einarbeitung des Titankomplexes verlief ohne Störungen. Die Prüfung der mechanischen Eigenschaften entsprechend des Beispiels 7 ergab folgende Ergebnisse:

| | |
|---|---|
| Zugspannung bei 100 % Dehnung | 0,49 [MPa] |
| Reißfestigkeit | 1,71 [MPa] |
| Bruchdehnung | 599 [%] |
| Härte (nach 21 Tagen, DIN 53505) | 25 Shore A |

## Patentansprüche

1. Verfahren zur Herstellung von Triorganyloxysilyl- bzw. Diorganyloxyorganosilyl-endgestoppten Poly(diorganosiloxanen) durch die Umsetzung von einem Polysiloxan oder einem Gemisch aus mehreren Polysiloxanen der Formel (Ia) 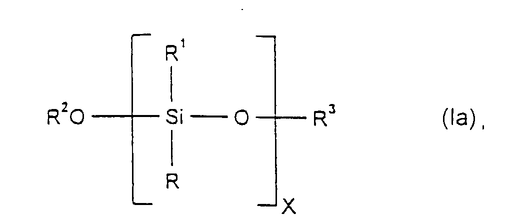 worin
R, R¹ C₁-C₁₈-Alkyl-/Alkoxyreste, Phenyl, C₂-C₁₈-Alkenyl-, Alkoxyalkylreste bedeuten und R gleich oder ungleich R¹ sein kann,
R², R³ = H- und
x = 10 bis 10 000 ist,
mit einem Alkoxysilan in Gegenwart von Fluoridionen als Aktivator, dadurch gekennzeichnet, daß die Umsetzung nach der Herstellung von Triorganyloxysilyl- bzw. Diorganyloxyorganylsilyl-endgestoppten Poly(diorganosiloxanen) durch Ausfällen der Fluoridionen als schwerlösliche Erdalkalimetallfluoride durch die Zugabe von in diesem System löslichen Erdalkalimetallsalzen beendet wird.

2. Verfahren zur Herstellung von Umsetzungsprodukten aus mindestens einem Polysiloxan der Formel (Ib) 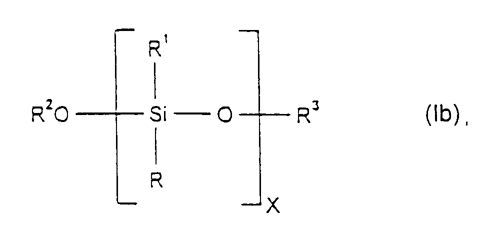 oder einem Polysiloxan mit Netzwerkstruktur mit einem Alkoxysilan zu Produkten der Formeln 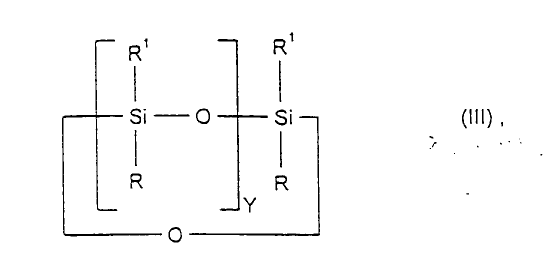 oder 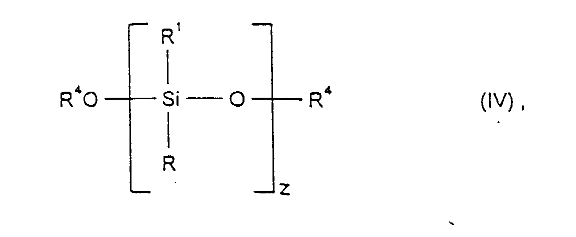 in der
R, R¹ C₁-C₁₈-Alkyl- oder C₁-C₁₈-Alkoxyreste, C₆-C₁₄-Aryl-, C₂-C₁₈-Alkoxyalkyl-/-Alkenylreste bedeuten und R gleich oder ungleich R¹ sein kann,
R², R³ C₁-C₁₈-Alkyl-, C₆-C₁₄-Aryl- und SiR'₃-Reste bedeuten, mit R' = C₁-C₁₈-Alkyl/-Alkoxy, C₆-C₁₄-Aryl-, C₂-C₁₈-Alkenyl-, Alkoxyalkyl-Reste, wobei R² und R³ gleich oder verschieden sein können,
R⁴ C₁-C₁₈-Alkylreste, -SiR'₃ mit R' = C₁-C₁₈-Alkoxy, -Alkyl, C₆-C₁₄-Aryl oder C₂-C₁₈-Alkenyl-/-Alkoxyalkyl bedeuten,
x 10 bis 10.000,
y 3 bis 20 und
z 1 bis 200 ist,
dadurch gekennzeichnet, daß die Reaktion in Gegenwart von Fluoridionen als Aktivator durchgeführt wird.

3. Verfahren nach Anspruch 1 oder 2, dadurch gekennzeichnet, daß als Alkoxysilan mindestens ein Alkoxysilan oder ein Gemisch aus mehreren Alkoxysilanen der Formel (II)
R⁷ ₙSi(OR⁶)₄₋ₙ (II),
worin
R⁶ = ein C₁-C₆-Alkyl-, C₂-C₈-Alkoxyalkylrest oder C₅-C₇-cycloaliphatischen Kohlenwasserstoffrest,
R⁷ = ein C₁-C₁₀-Alkyl-, C₂-C₁₈-Alkenyl-, Phenylrest und
n = 0,1 oder 2
eingesetzt werden.

4. Verfahren nach einem der Ansprüche 1 bis 3, dadurch gekennzeichnet, daß als Fluoridionenquelle Nichtmetallfluoride eingesetzt werden.

5. Verfahren nach einem der Ansprüche 1 bis 4, dadurch gekennzeichnet, daß als Fluoridionenquelle Tetraalkylammoniumfluorid und/oder Ammoniumfluorid, sowie Trialkylamin-hydrofluoride und andere Polyhydrofluoride tertiärer organischer Amine eingesetzt werden.

6. Verfahren nach einem der Ansprüche 1 bis 5, dadurch gekennzeichnet, daß als Fluoridionenquelle Alkalimetallfluoride eingesetzt werden.

7. Verfahren nach einem der Ansprüche 1 bis 6, dadurch gekennzeichnet, daß bei der Umsetzung 0,001 bis 5 Gew.-% an Fluoridionen, bezogen auf die Gesamtmischung, eingesetzt werden.

8. Verfahren nach einem oder mehreren der Ansprüche 1 bis 7, dadurch gekennzeichnet, daß die Umsetzung bei Temperaturen zwischen 0 bis 300°C mindestens 5 Minuten dauert.

## Claims

1. A process for preparing triorganyloxysilyl or diorganyloxyorganosilyl terminated poly(diorganosiloxanes) by reacting a polysiloxane or a mixture of several polysiloxanes of the formula (Ia) 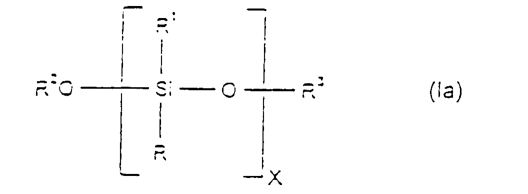 in which,
R, R¹ may be a C₁-C₁₈-alkyl/alkoxy group, phenyl, or a C₂-C₁₈-alkenyl or alkoxyalkyl group and R may be identical to or different from R¹,
R², R³ = H, and
x = 10 to 10 000,
with an alkoxysilane in the presence of fluoride ions as activator, characterised in that the reaction is terminated after preparing triorganyloxysilyl or diorganyloxyorganylsilyl terminated poly(diorganosiloxanes) by precipitating the fluoride ions as sparingly soluble alkaline earth metal fluorides by the addition of alkaline earth metal salts which are soluble in this system.

2. A process for preparing reaction products from at least one polysiloxane of the formula (Ib) 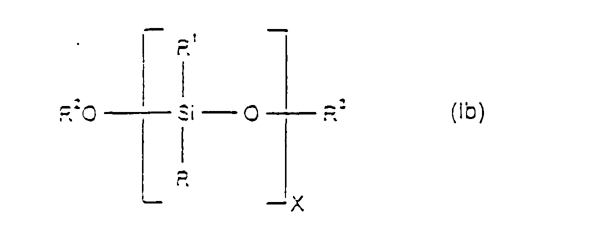 or a polysiloxane with a network structure with an alkoxysilane to give products of the formulae 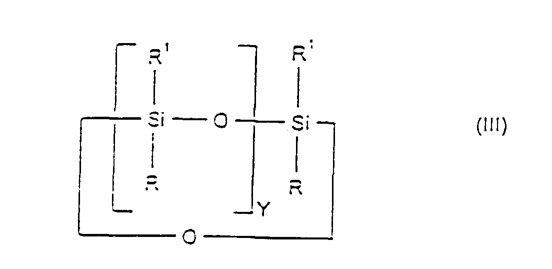 or 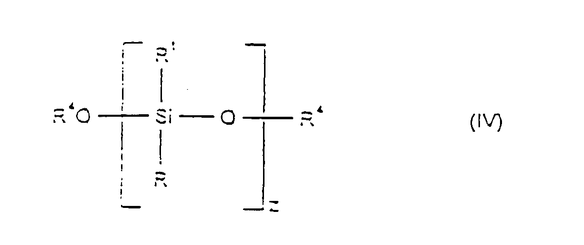 in which,
R, R¹ represent a C₁-C₁₈-alkyl or C₁-C₁₈-alkoxy group, a C₆-C₁₄-aryl or C₂-C₁₈-alkoxyalkyl/alkenyl group and R may be identical to or different from R¹,
R², R³ may be a C₁-C₁₈-alkyl, C₆-C₁₄-aryl or SiR'₃ group, where R' = a C₁-C₁₈-alkyllalkoxy, C₆-C₁₄-aryl, C₂-C₁₈-alkenyl or alkoxyalkyl group, wherein R² and R³ may be identical or different,
R⁴ represents a C₁-C₁₈-alkyl or SiR'₃ group, where R' = a C₁-C₁₈-alkoxy or alkyl, C₆-C₁₄-aryl or a C₂-C₁₈-alkenyl/alkoxyalkyl group,
x is 10 to 10 000,
y is 3 to 20 and
z is 1 to 200,
characterised in that the reaction is performed in the presence of fluoride ions as activator.

3. A process according to claim 1 or 2, characterised in that at least one alkoxysilane or a mixture of several alkoxysilanes of the formula (II)
R⁷ ₙSi(OR⁶)₄₋ₙ (II),
in which
R⁶ = a C₁-C₆-alkyl, C₂-C₈-alkoxyalkyl group, or a C₅--C₇-cycloaliphatic hydrocarbon group,
R⁷ = a C₁-C₁₀-alkyl, C₂-C₁₀-alkenyl or phenyl group and
n = 0, 1 or 2
is used as an alkoxysilane.

4. A process according to one of claims 1 to 3, characterised in that non-metal fluorides are used as sources of fluoride ions.

5. A process according to one of claims 1 to 4, characterised in that a tetraalkylammonium fluoride and/or ammonium fluoride, as well as trialkylamine hydrofluorides or other polyhydrofluorides of tertiary organic amines are used as sources of fluoride ions.

6. A process according to one of claims 1 to 5, characterised in that alkali metal fluorides are used as sources of fluoride ions.

7. A process according to one of claims 1 to 6, characterised in that 0.001 to 5 wt.% of fluoride ions, with respect to the total mixture, are used during the reaction.

8. A process according to one or more of claims 1 to 7, characterised in that the reaction time is at least 5 minutes at temperatures between 0 and 300°C.

## Revendications

1. Procédé de préparation de poly(diorganosiloxanes) aux extrémités bloquées par des groupes triorganyloxysilyle ou diorganyloxyorganosilyle par réaction d'un polysiloxane ou d'un mélange de plusieurs polysiloxanes de formule (Ia) 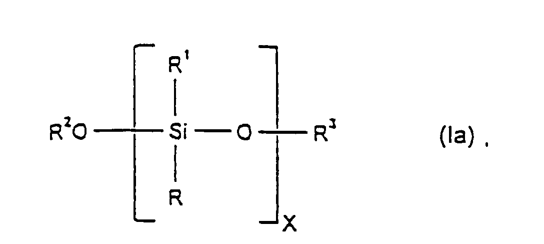 dans laquelle
R, R¹ représentent des restes alkyle ou alcoxy en C₁ -C₁₈, phényle, des restes alcényle ou alcoxyalkyle en C₂-C₁₈, et R et R¹ peuvent être identiques ou différents,
R², R³ = H et
x = 10 à10 000,
avec un alcoxysilane en présence d'ions fluorures comme activateurs, caractérisé en ce que l'on termine la réaction après la préparation de poly(diorganosiloxanes) bloqués aux extrémités par des groupes triorganyloxysilyle ou diorganyloxyorganylsilyle en faisant précipiter les ions fluorure sous forme de fluorures de métaux alcalino-terreux peu solubles par addition de sels de métaux alcalino-terreux solubles dans ce système.

2. Procédé de préparation de produits de réaction d'au moins un polysiloxane de formule (Ib) 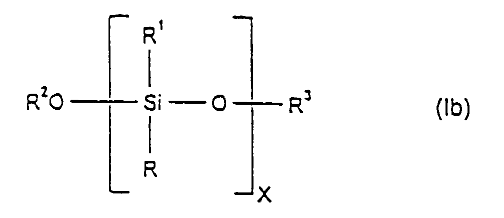 ou d'un polysiloxane à structure réticulée, avec un alcoxysilane, donnant des produits de formule 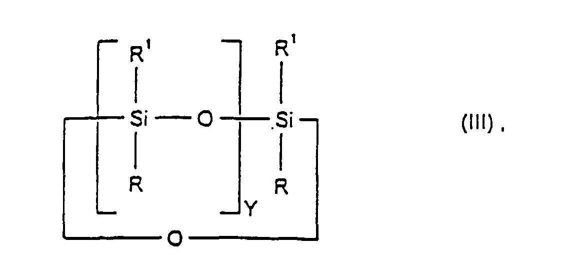 ou 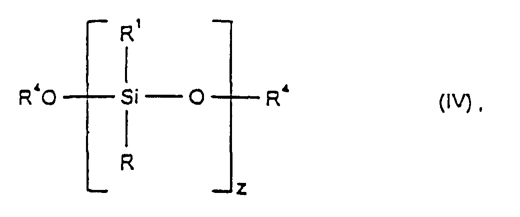 dans lesquelles
R, R¹ représentent des restes alkyle en C₁-C₁₈ ou alcoxy en C₁-C₁₈, des restes aryle en C₆-C₁₄, ou des restes alcoxyalkyle ou alcényle en C₂-C₁₈, et R et R¹ peuvent être identiques ou différents,
R², R³ représentent des restes alkyle en C₁-C₁₈, aryle en C₆-C₁₄ et SiR'₃, où R' est un reste alkyle ou alcoxy en C₁-C₁₈, un reste aryle en C₆-C₁₄, ou un reste alcényle ou alcoxyalkyle en C₂-C₁₈, R² et R³ pouvant être identiques ou différents ;
R⁴ représente un reste alkyle en C₁-C₁₈, -SiR'₃ où R' est un reste alcoxy ou alkyle en C₁-C₁₈, un reste aryle en C₆-C₁₄ ou un reste alcényle ou alcoxyalkyle en C₂-C₁₈,
x = 10 à 10 000,
y = 3 à 20 et
z = 1 à 200,
caractérisé en ce que l'on effectue la réaction en présence d'ions fluorure comme activateur.

3. Procédé selon la revendication 1 ou 2, caractérisé en ce que en ce que l'on utilise comme alcoxysilane au moins un alcoxysilane ou un mélange de plusieurs alcoxysilanes de formule (II)
R⁷ ₙSi(OR⁶)₄₋ₙ (II)
dans laquelle
R⁶ est un reste alkyle en C₁-C₆, un reste alcoxyalkyle en C₂-C₈ ou un reste hydrocarboné cycloaliphatique en C₅-C₇,
R⁷ est un reste alkyle en C₁-C₁₀, alcényle en C₂-C₁₀ ou phényle et
n est 0, 1 ou 2.

4. Procédé selon l'une des revendications 1 à 3, caractérisé en ce que l'on utilise des fluorures non métalliques comme source d'ions fluorure.

5. Procédé selon l'une des revendications 1 à 4, caractérisé en ce que l'on utilise comme source d'ions fluorure un fluorure de tétraalkylammonium et/ou du fluorure d'ammonium, ainsi que des fluorhydrates de trialkylamine et d'autres polyfluorhydrates d'amines organiques tertiaires.

6. Procédé selon l'une des revendications 1 à 5, caractérisé en ce que l'on utilise des fluorures de métaux alcalins comme source d'ions fluorure.

7. Procédé selon l'une des revendications 1 à 6, caractérisé en ce que l'on utilise dans la réaction 0,001 à 5 % en masse d'ions fluorure par rapport au mélange total.

8. Procédé selon l'une ou plusieurs des revendications 1 à 7, caractérisé en ce que la réaction dure au moins 5 minutes à des températures comprises entre 0 et 300°C.
